(19)

**Europäisches Patentamt**
**European Patent Office**
**Office européen des brevets**

(11) **EP 2 584 810 A1**

(12) **EUROPEAN PATENT APPLICATION**
published in accordance with Art. 153(4) EPC

(43) Date of publication:
**24.04.2013 Bulletin 2013/17**

(21) Application number: **10853420.7**

(22) Date of filing: **21.06.2010**

(51) Int Cl.:
***H04W 16/00*** (2009.01)

(86) International application number:
**PCT/CN2010/074144**

(87) International publication number:
**WO 2011/160277 (29.12.2011 Gazette 2011/52)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(71) Applicant: **Fujitsu Limited**
**Kawasaki-shi, Kanagawa 211-8588 (JP)**

(72) Inventors:
  • **WANG, Jian**
    **Beijing 100025 (CN)**
  • **ZHOU, Hua**
    **Beijing 100025 (CN)**
  • **WU, Jianming**
    **Beijing 100025 (CN)**

(74) Representative: **Ward, James Norman et al**
    **Haseltine Lake LLP**
    **Lincoln House, 5th Floor**
    **300 High Holborn**
    **London WC1V 7JH (GB)**

(54) **METHOD FOR REFERENCE SIGNAL TRANSMISSION, METHOD FOR CHANNEL QUALITY ESTIMATION, MOBILE STATION, BASE STATION, AND WIRELESS COMMUNICATION SYSTEM**

(57)     A method for reference signal transmission, a method for channel quality estimation, a mobile station, a base station, and a wireless communication system are disclosed in the present invention. A method doe reference signal transmission includes: according to a first precoding matrix for precoding data sent by multiple antennas of a mobile station, precoding a demodulation reference signal sent with the data; according to a second precoding matix, precoding a sounding reference signal sent with the data, wherein the different columns and the different rows of the first precoding matrix and the second precoding matix correspond to different data and different antennas respectively; transmitting the precoded sounding reference signal and the precoded demodulation reference signal, wherein the ranks of a matrix composed by arrangement of the whole column vectors of the first precoding matrix and the whole column vectors of the second precoding matrix are greater than or equal with the number of antennas. Under the circumstance of the mobile station equipped with multiple antennas, the present invention can effectively reduce the occupation of Sounding Reference Signal (SRS) resource during the each antenna channel quality estimation.

FIG. 1

EP 2 584 810 A1

**Description**

FIELD OF THE INVENTION

The present invention relates to wireless communication technologies, and more particularly to a a reference signal transmission method, a channel quality estimation method, a mobile station, a base station and a wireless communication system.

BACKGROUND OF THE INVENTION

In 4th generation (4G) mobile communication systems, for example, in the uplink of LTE (Long-Term Evolution) single-carrier frequency division multiple access (SC-FDMA), a reference signal (RS) is used for data demodulation and channel detection.

The functions of an uplink reference signal include channel estimation for coherent demodulation, channel quality detection, power control, timing estimation for uplink scheduling, and direction- of-arrival estimation supporting downlink beamforming.

Most LTE uplink reference signals are based on a Zadoff-Chu (ZC) sequence. ZC sequence is also known as the GCL (Generalized Chirp-Like) sequence. The sequence is a non-binary unit amplitude sequence, meeting the CAZAC (Constant Amplitude Zero Autocorrelation) characteristic. A CAZAC sequence is a complex-valued signal having the form of $e^{j\alpha k}$. A ZC sequence having the length of a prime number $N_{ZC}$ can be written as

$$a_q = \exp\left[-j2\pi q\frac{n(n+1)/2+ln}{N_{ZC}}\right].$$

where $q \in \{1,\cdots,N_{ZC}\text{-}1\}$ is the root index of the ZC sequence, $n=0,1,\cdots,N_{ZC}\text{-}1$, $l \in N$. In LTE, $l=0$ is set for simplicity reasons.

A ZC sequence has the following characteristics.

1. A ZC sequence has a constant amplitude, which remains constant after DFT calculations. The constant amplitude characteristic limits peak-to-average power ratio and boundary and time-flat interferences to other users. In addition, this characteristic can also simplify implementation when only phase calculation and storing are needed instead of both phase and amplitude.

2. A ZC sequence of any length has a ideal cyclic self-correlation characteristic, i.e., the cyclic shift correlation is a $\delta$ function.

Due to the ideal characteristics of a ZC sequence, a uplink reference signal has the following fine characteristics: (1) constant amplitude in the frequency domain, which enables equal excitations to all the allocated sub-carriers in unbiased channel estimation; (2) low Cubic Metric (CM) in the time domain; (3) fine self-correlation characteristic, which facilitates accurate channel estimation; (4) good cross-correlation characteristic, which reduces interferences from reference signals transmitted from other cells on the same resources.

The uplink supports two reference signals:

(1) Demodulation reference signal (DMRS). This reference signal is used mainly for channel estimation in uplink data transmission or signaling information transmission, and thereby correlation detection; and

(2) Sounding reference signal (SRS). This reference signal is used for channel quality measurement, and thereby frequency-selective uplink scheduling.

In a LTE system, a sub-frame has a total of 14 symbols, numbered 0, 2, 1,..., 13. In a Rel.8/9 system, a user's SRS signal can only be transmitted in the symbol No. 13. In a Rel.8/9 system, a user's DMRS signal can only be transmitted in the symbol No.3 and symbol No. 10. Time-division multiplexing is used for uplink and SRS and data symbols. The DMRS of a given mobile station and the uplink data channel (PUSCH) or uplink signaling channel (PUCCH) of the mobile station have the same bandwidth, e.g., the PUSCH bandwidth in the cell bandwidth. Accordingly, when different bandwidths of the system are allocated for different users (FDMA), their DMRS are also orthogonal to each other. The SRS bandwidth of a can be different from the bandwidth used for data transmission. The SRS signal of a user is always sent on the last SC-FMDA symbol of a sub-frame, and the parameters of the SRS signals are notified with higher-level signaling of the system. Frequency-Division Multiplexing (FDM) and Code-Division Multiplexing, or Time-division Multiplexing (TDM) can be used for SRS signals of respective mobile stations.

In a LTE system, both single-antenna transmission mode and antenna-selective transmission mode are supported for sending the uplink signals of a user. In SRS resource allocation, each user can be assigned with one set of SRS resources.

In a LTE-Advanced system, in order to meet higher uplink transmission requirements, the mobile station needs to support uplink transmission with a higher rank, e.g., rank1-rank4, which thereby requires the mobile station to be equipped with a higher number of antennas, e.g., two antennas to support transmission with the maximum rank 2, or four antennas to support transmission with the maximum rank 4.

When the mobile station is equipped with a higher number of antennas for transmission with a higher rank, in order to detect and estimate the channel quality of each antenna, more SRS resources are needed to be allocated for each antenna, resulting in more occupied SRS resources.

Therefore, an additional method is required to reduce the SRS resources occupied for estimate the channel quality of each of the antennas in the case where the mobile station is equipped with multiple antennas.

The following methods have been developed in the prior art to solve the above problem.

The first method is not to precode the DMRS so that the DMRS can also be used as an SRS, thereby reducing occupied SRS resources. The drawback of this method is that it requires two receivers for physical uplink shared channel (PUSCHs) with different DNMSs: one for precoded DMRS, the other for unprecoded DMRS. Furthermore, since each antenna uses one cyclic shift resource when uncoded DMRS is used for channel quality estimation, the use of cyclic shift (CS) resources is inefficient.

The second method is to transmit both signals, precoded DMRS and unprecoded DMRS, in a DMRS sub-frame. This method does not require two receivers because of the unchanged existence of preceded DMRS; however, there is still the low efficiency problem with the cyclic shift resources because each antenna uses one cyclic shift resource when uncoded DMRS is used for channel quality estimation.

To sum up, it is desired to develop a reference signal transmission method and a corresponding channel quality estimation method which can effectively reduce SRS resources occupied in channel quality estimation for each antenna in the case where the mobile station is equipped with multiple antennas.

SUMMARY OF THE INVENTION

A brief summary of the present invention is given to provide basic understanding on some aspects of the present invention. It will be appreciated that the summary is not an exhaustive description of the present invention. It is not intended to define a key or important part of the present invention, nor is it intended to define the scope of the present invention. It aims to give some concepts in a simplified form, as a preface to the detailed description that follows.

At least one object of the present invention is to provide a reference signal transmission method, a channel quality estimation method, a mobile station, a base station and a wireless communication system, which can overcome at least some of the drawbacks and deficiencies of the prior art described above, so that SRS resources occupied in channel quality estimation for each antenna can be effectively reduced in the case where the mobile station is equipped with multiple antennas.

In order to achieve the above object, according to an embodiment of the present invention, it is provided a reference signal transmission method, including: precoding a demodulation reference signal to be transmitted along with data to be transmitted along with data via a plurality of antennas of a mobile station according to a first precoding matrix for precoding the data, and precoding a sounding reference signal to be transmitted along with the data according to a second precoding matrix, in which different columns and different lines in the first and second precoding matrices correspond to different data and different antennas, respectively; and transmitting a precoded sounding reference signal and a precoded demodulation reference signal, wherein the rank of the formed by arranging all of the column vectors in the first and second precoding matrices is equal to or larger than the number of the antennas.

According to an embodiment of the present invention, the first and second precoding matrices may be set in advance by a base station and notified to a mobile station. Alternatively, the first precoding matrix may be set in advance by a base station and notified to a mobile station, and the second precoding matrix may be determined by the mobile station on receipt of the first precoding matrix according to the first precoding matrix station and a pre-defined correspondence between the first and second precoding matrices.

According to an embodiment of the present invention, the first and second precoding matrices may be orthogonal to each other.

According to an embodiment of the present invention, the first and second precoding matrices may be changed by a base station aperiodically and notified to a mobile station.

In order to achieve the above object, according to another embodiment of the present invention, it is provided a channel quality estimation method, including: performing channel estimation according to a received demodulation reference signal precoded with a first precoding matrix and transmitted along with data via a plurality of antennas of a mobile station to obtain a demodulation reference signal channel estimation value, and performing channel estimation according to a received sounding reference signal precoded with a second precoding matrix and transmitted along with the data to obtain a sounding reference signal channel estimation value, in which different columns and different lines in the first and second precoding matrices correspond to different data and different antennas, respectively; obtaining a first set of equations taking channel quality estimation values of respective antennas as variables according to the first precoding matrix and the obtained demodulation reference signal channel estimation value, and obtaining a second set of equations taking channel quality estimation values of respective antennas as variables according to the second precoding matrix and the obtained sounding reference signal channel estimation value, wherein the rank of the matrix formed by arranging all of the column vectors in the first and second precoding matrices is equal to or larger than the number of the antennas; and calculating channel quality estimation values of respective antennas by combining the first and second sets of equations.

According to an embodiment of the present invention, the first and second precoding matrices may be set in advance by a base station and notified to a mobile station. Alternatively, the first precoding matrix may be set in advance by a base station and notified to a mobile station, and the second precoding matrix may be determined by the mobile station on receipt of the first precoding matrix according to the first precoding matrix and a pre-defined correspondence between the first and second precoding matrices.

According to an embodiment of the present invention, the first and second precoding matrices may be orthogonal to each other.

According to an embodiment of the present invention, the first and second precoding matrices may be changed by a base station aperiodically and notified to a mobile station.

In order to achieve the above object, according to another embodiment of the present invention, it is provided a mobile station, including: a plurality of antennas; a precoding unit, configured for precoding a demodulation reference signal to be transmitted along with data via a plurality of antennas according to a first precoding matrix for precoding the data, and precoding a sounding reference signal to be transmitted along with the data according to a second precoding matrix, in which different columns and different lines in the first and second precoding matrices correspond to different data and different antenna, respectively, the rank of the matrix formed by arranging all of the column vectors in the first and second precoding matrices is equal to or larger than the number of the antennas; and a transmission unit, configured for transmitting a precoded sounding reference signal and a precoded demodulation reference signal.

According to an embodiment of the present invention, the first and second precoding matrices may be set in advance by a base station and notified to a mobile station. Alternatively, the first precoding matrix may be set in advance by a base station and notified to a mobile station, and the second precoding matrix may be determined by the mobile station on receipt of the first precoding matrix according to the first precoding matrix and a pre-defined correspondence between the first and second precoding matrices.

According to an embodiment of the present invention, the first and second precoding matrices may be orthogonal to each other.

According to an embodiment of the present invention, the first and second precoding matrices may be changed by a base station aperiodically and notified to a mobile station.

In order to achieve the above object, according to another embodiment of the present invention, it is provided a base station, including: a channel estimation unit configure for performing channel estimation according to a received demodulation reference signal precoded with a first precoding matrix and transmitted along with data via a plurality of antennas of a mobile station to obtain a demodulation reference signal channel estimation value, and performing channel estimation according to a received sounding reference signal precoded with a second precoding matrix and transmitted along with the data to obtain a sounding reference signal channel estimation value, in which different columns and different lines in the first and second precoding matrices correspond to different data and different antenna, respectively; a first calculating unit configured for obtaining a first set of equations taking channel quality estimation values of respective antennas as variables according to the first precoding matrix and the obtained demodulation reference signal channel estimation value, and obtaining a second set of equations taking channel quality estimation values of respective antennas as variables according to the second precoding matrix and the obtained sounding reference signal channel estimation value, wherein the rank of the matrix formed by arranging all of the column vectors in the first and second precoding matrices is equal to or larger than the number of the antennas; and a second calculation unit configured for calculating channel quality estimation values of respective antennas by combining the first and second sets of equations.

According to an embodiment of the present invention, the first and second precoding matrices may be set in advance by a base station and notified to a mobile station. Alternatively, the first precoding matrix may be set in advance by a base station and notified to a mobile station, and the second precoding matrix may be determined by the mobile station on receipt of the first precoding matrix according to the first precoding matrix and a pre-defined correspondence between the first and second precoding matrices.

According to an embodiment of the present invention, the first and second precoding matrices may be orthogonal to each other.

According to an embodiment of the present invention, the first and second precoding matrices may be changed by a base station aperiodically and notified to a mobile station.

In order to achieve the above object, according to another embodiment of the present invention, it is provided a wireless communication system, including the base station as described above and the mobile station as described above.

The embodiments of the present invention can effectively reduce SRS resources occupied in channel quality estimation for each antenna in the case where the mobile station is equipped with multiple antennas.

The above and other advantages of the present invention will become more apparent when read in conjunction with the description of the preferred embodiments of the present invention and the accompanying drawings.

BRIEF DESCRIPTION OF THE DRAWINGS

For a better understanding of the present invention, the present invention will be described in detail hereinafter with reference to the accompanying drawings. It is noted that in the accompanying drawings the same or like reference numerals denote the same or like components. The accompanying drawings, together with the detailed description below, are included in the specification and form a part of the specification, and are used to illustrate the preferred embodiments of the present invention and explain the principle and advantages of the present invention. Among the accompanying drawings:

Figure 1 shows a flowchart of a reference signal transmission method according to Embodiment 1 of the invention;

Figure 2 shows a flowchart of a reference signal transmission method according to Embodiment 2 of the invention;

Figure 3 shows a flowchart of a channel quality estimation method according to Embodiment 3 of the invention;

Figure 4 shows a flowchart of a channel quality estimation method according to Embodiment 4 of the invention;

Figure 5 illustrates a schematic diagram of a mobile station according to Embodiment 5 of the invention;

Figure 6 illustrates a schematic diagram of a base station according to Embodiment 6 of the invention;

Figure 7 illustrates a schematic diagram of a wireless communication system according to Embodiment 7 of the invention.

The skilled person will appreciate that elements in the figures are illustrated for simplicity and clarity, and are not necessarily drawn to scale. For example, the size of some of the elements in the accompanying drawings may be enlarged with respect to the other components, in order to help improve the understanding of the embodiments of the present invention.

DETAILED OF THE INVENTION

Exemplary embodiments of the present invention will be described hereinafter in conjunction with the accompanying drawings. In the interest of clarity and simplicity, not all the features of an actual implementation are described herein. However, it will be appreciated that in the development of any actual embodiment, numerous implementation-specific decisions shall be made in order to achieve the developer's specific goals, such as compliance with system-related and business-related constraints, which may vary from one implementation to another. Moreover, it will be appreciated that such development effort might be complex and time-consuming, but would nevertheless be a routine undertaking for those skilled in the art having the benefit of the present disclosure.

In addition, it is noted that only those apparatus structures and/or processing steps that are closely related to the technical solutions of the present invention are shown in the figures in order to avoid unnecessarily obscuring the present invention. Other details that are not closely related to the present invention and known to those skilled in the art are omitted.

For example, the present invention relates mainly to a reference signal transmission method and a mobile station in a wireless communication system using the method, a channel quality estimation method and a base station using the method, and a wireless communication system including the above mobile station and the above base station. Accordingly, those not closely related to the present invention and known to the skilled in the art such as choice of the base station side modulation method, modulation and coding processes, scheduling algorithm, and ranging, synchronization, and coding and decoding processes in wireless data transceiving are omitted, and attention is drawn to those processes related to reference signal transmission of the mobile station and antenna channel quality estimation of the base station.

It is assumed that the mobile station is equipped with four antennas, and the uplink DMRS is precoded using the precoding matrix $[1,1,1,1]^T$. In this case, the system transmits one layer of data.

Then, according to channel estimation based on the DMRS, it can be obtained: $H=H1+H2+H3+H4+n$, where $Hn$ ($n \in \{1,2,3,4\}$) is the estimated value of the channel quality of the n-th antenna. It can be seen from the above formula, since the number of equations is less than the number of variables to be solved (i.e., the estimated values of channel qualities of respective antennas), theoretically it is impossible to separate the estimated values of channel qualities of respective antennas from H.

It is still assumed since the mobile station is equipped with four antennas, but the uplink DMRS is precoded using the precoding matrix $[1\ 1\ 0\ 0;\ 0\ 0\ 1\ \text{-j}]^T$. In this case, the system transmits two layers of data.

Then, according to channel estimation based on the DMRS, it can be obtained: Ha=H1+H2+na, and Hb=H3-H4*j+nb, where Hn (n∈{1,2,3,4}) is the estimated value of the channel quality of the n-th antenna, Hx (x∈{a,b}) is the estimated value of the channel quality of the x-th layer, and na and nb are noises. As can be seen from the above formula, since the number of equations is less than the number of variables to be solved (i.e., the estimated values of channel qualities of respective antennas),theoretically it is impossible to separate the estimated values of channel qualities of respective antennas from Ha and Hb.

The inventors of the present application the present invention based on the above findings.

Firstly, the present invention provides a reference signal transmission method applied at a mobile station.

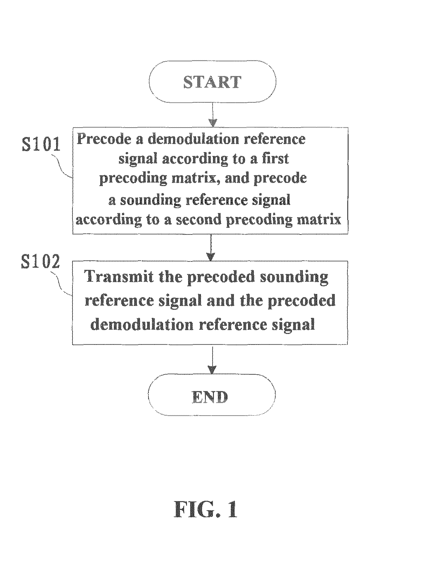

Figure 1 shows a flowchart of a reference signal transmission method according to Embodiment 1 of the present invention.

As shown in Figure 1, the reference signal transmission method according to Embodiment 1 of the present invention starts at step S101.

In step S101, a demodulation reference signal (DMRS) to be transmitted along with data to be transmitted via a plurality of antennas of the mobile station is precoded according to a first precoding matrix for precoding the data, and a sounding reference signal (SRS) to be transmitted along with the data is precoded according to a second precoding matrix, in which different columns and different lines in the first and second precoding matrices correspond to different data and different antenna, respectively.

That is, in step S101, not only the DNMS is precoded, the SRS is also precoded.

In addition, in step S101, the rank of the matrix formed by arranging all of the column vectors in the first and second precoding matrices is equal to or larger than the number of the antennas.

Then, in step S102, the precoded sounding reference signal and the precoded demodulation reference signal are transmitted.

Thus, at a corresponding base station, a first set of equations can be obtained according to all of the column vectors in the first precoding matrix and channel quality estimation values based on the precoded DMRS, and the number of equations in the first set is equal to the number of column vectors in the first precoding matrix. A second set of equations can be obtained according to all of the column vectors in the second precoding matrix and channel quality estimation values based on the precoded SRS, and the number of equations in the second set is equal to the number of column vectors in the second precoding matrix. The rank of the matrix formed by arranging all of the column vectors in both matrices is equal to or larger than the number of antennas, therefore the number of equations in the first and second sets is equal to or larger than the total number of variables to be solved (i.e., channel quality estimation values of respective antennas). Therefore, based on the two sets, the channel quality estimation values of respective antennas can be derived. In the case where the rank of the matrix formed by arranging all of the column vectors in both matrices is equal to the number of antennas, the channel quality estimation values of respective antennas can be derived fitly. In the case where the rank of the matrix formed by arranging all of the column vectors in both matrices is larger than the number of antennas, the channel quality estimation values of respective antennas can be derived by arbitrarily choosing equations from the first and second sets so long as the number of the equations is equal to the number of antennas.

The skilled in the art will understand that, both the first precoding matrix and the second precoding matrix can be chosen and configured flexibly depending on the specific application, and shall fall within the spirit and scope of protection of the present invention as claimed.

From the above, in the reference signal transmission method according to the embodiment of the present invention, DMRS and SRS are precoded according to the first precoding matrix and the second precoding matrix respectively, and the rank of the matrix formed by arranging all of the column vectors in both precoding matrices is equal to or larger than the number of antennas, so that channel quality estimation for each antennas can be done on the corresponding base station side by using DMRS in conjunction with SRS.

The reference signal sending method according to the embodiment of the present invention uses precoded DMRS in conjunction with precoded SRS, thereby effectively reduce SRS resources occupied in antenna channel quality estimation, while avoiding the drawback of using precoded DMRS separately, in which case channel quality estimation for each antennas can not be realized.

In addition, the reference signal sending method according to the embodiment of the present invention sends precoded DMRS and precoded SRS so than the base station side can perform channel quality estimation jointly based on the precoded DMRS and the precoded SRS, which therefore eliminates the need for two receivers, and reduces occupied cyclic shift resources, thereby overcoming the drawbacks in the prior art.

An example is given below where the first precoding matrix and the second precoding matrix orthogonal to each other.

Table 1 shows the codebook of a precoding matrix for two-layered transmission.

Table 1 Codebook of precoding matrix for two-layered transmission

| Codebook | | | | | | | |
|---|---|---|---|---|---|---|---|
| Index 0-7 | $\frac{1}{2}\begin{bmatrix} 1 & 0 \\ 1 & 0 \\ 0 & 1 \\ 0 & -j \end{bmatrix}$ | $\frac{1}{2}\begin{bmatrix} 1 & 0 \\ 1 & 0 \\ 0 & 1 \\ 0 & j \end{bmatrix}$ | $\frac{1}{2}\begin{bmatrix} 1 & 0 \\ -j & 0 \\ 0 & 1 \\ 0 & 1 \end{bmatrix}$ | $\frac{1}{2}\begin{bmatrix} 1 & 0 \\ -j & 0 \\ 0 & 1 \\ 0 & -1 \end{bmatrix}$ | $\frac{1}{2}\begin{bmatrix} 1 & 0 \\ -1 & 0 \\ 0 & 1 \\ 0 & -j \end{bmatrix}$ | $\frac{1}{2}\begin{bmatrix} 1 & 0 \\ -1 & 0 \\ 0 & 1 \\ 0 & j \end{bmatrix}$ | $\frac{1}{2}\begin{bmatrix} 1 & 0 \\ j & 0 \\ 0 & 1 \\ 0 & 1 \end{bmatrix}$ | $\frac{1}{2}\begin{bmatrix} 1 & 0 \\ j & 0 \\ 0 & 1 \\ 0 & -1 \end{bmatrix}$ |
| Index 8-15 | $\frac{1}{2}\begin{bmatrix} 1 & 0 \\ 0 & 1 \\ 1 & 0 \\ 0 & 1 \end{bmatrix}$ | $\frac{1}{2}\begin{bmatrix} 1 & 0 \\ 0 & 1 \\ 1 & 0 \\ 0 & -1 \end{bmatrix}$ | $\frac{1}{2}\begin{bmatrix} 1 & 0 \\ 0 & 1 \\ -1 & 0 \\ 0 & 1 \end{bmatrix}$ | $\frac{1}{2}\begin{bmatrix} 1 & 0 \\ 0 & 1 \\ -1 & 0 \\ 0 & -1 \end{bmatrix}$ | $\frac{1}{2}\begin{bmatrix} 1 & 0 \\ 0 & 1 \\ 0 & 1 \\ 1 & 0 \end{bmatrix}$ | $\frac{1}{2}\begin{bmatrix} 1 & 0 \\ 0 & 1 \\ 0 & -1 \\ 1 & 0 \end{bmatrix}$ | $\frac{1}{2}\begin{bmatrix} 1 & 0 \\ 0 & 1 \\ 0 & 1 \\ -1 & 0 \end{bmatrix}$ | $\frac{1}{2}\begin{bmatrix} 1 & 0 \\ 0 & 1 \\ 0 & -1 \\ -1 & 0 \end{bmatrix}$ |

In the case where a mobile station having 4 antennas uses the precoding index 0 in Table 1 to send a rank-2 signal, if the technical solution in the prior art is applied that uses unprecoded DMRS for channel quality estimation, six cyclic shift resources are needed. However, if the reference signal transmission method according to the embodiment of the present invention is applied, since channel quality estimation is perfomed by using precoded DMRS in conjunction with precoded SRS, channel quality estimation values of respective antennas can be obtained by only four cyclic shift resources: two for DMRS, and two for the precoded SRS.

In addition, if the method in the prior art is applied that uses unprecoded SRS for channel quality estimation, one SRS resource is required for each antenna, hence four SRS resources are needed. That is, in comparison with the reference signal transmission method in the prior art, the reference signal transmission method according to the embodiment of the present invention reduces SRS resources occupied in channel quality estimation by 50%.

Moreover, the reference signal transmission method according to the embodiment of the present invention uses less SRS resources, which can further reduce system interference, and increase the accuracy of channel quality estimation of the system.

Alternatively, in the reference signal transmission method according to the embodiment of the present invention, the first precoding matrix and the second precoding matrix may be orthogonal to each other.

As an example, the mobile station may be equipped with four antennas.

On the mobile station side, data and DMRS are precoded using the precoding matrix $Pdata=[1\ 1\ 0\ 0;\ 0\ 0\ 1\ -j]^T$, and SRS is precoded using the precoding matrix $Psrs=[1\ -1\ 0\ 0;\ 0\ 0\ 1\ j]^T$. It can be seen that the precoding matrix Pdata and the precoding matrix Psrs are orthogonal to each other.

Accordingly, on the base station side, channel quality estimation values obtained from the received precoded DMRS are $h_{1,dmrs}$ and $h_{2,dmrs}$, channel quality estimation values obtained from the received precoded SRS are $h_{1,srs}$ and $h_{2,srs}$.

Then, according to $h_{1,dmrs}$, $h_{2,dmrs}$, $h_{1,srs}$ and $h_{2,srs}$, and the full-rank matrix $[1\ 1\ 0\ 0;\ 0\ 0\ 1\ -j;\ 1\ -1\ 0\ 0;\ 0\ 0\ 1\ j]^T$ formed by Pdata and Psrs, the following set of equations can be obtained:

$$h_{1,dmrs}=H_{antenna1}+H_{antenna2}+na,$$

$$h_{2,dmrs}=H_{antenna3}-H_{antenna4}*j+nb,$$

$$h_{1,srs}=H_{antenna1}-H_{antenna2}+nc,$$

$$h_{2,srs}=H_{antenna3}+H_{antenna4}*j+nd,$$

where $H_{antennan}$ ($n\in\{1,2,3,4\}$) is the channel quality estimation value of the n-th antenna, and na, nb, nc and nd are noises.

From the above formula, it can be seen that since the number of the equation (i.e., four) is equal to the number of variables to be solved (i.e., the channel quality estimation values of respective antennas, $H_{antennan}$ ($n\in\{1,2,3,4\}$)) Therefore, by solving the set of equations, the channel quality estimation values of respective antennas are:

$$H_{antenna1}=h_{1,dmrs}+h_{1,srs}$$

$$H_{antenna2} = h_{1,dmrs} - h_{1,srs}$$

$$H_{antenna3} = h_{2,dmrs} + h_{2,srs}$$

$$H_{antenna4} = (h_{2,dmrs} - h_{2,srs})/j$$

The skilled in the art will understand that the above precoding matrices used in Embodiment 1 of the present invention are merely exemplary, rather than limiting. The skilled in the art can set different precoding matrices flexibly according to the needs of a practical application, meeting application requirements of practical wireless communication systems, which falls within the spirit and scope of protection of the present invention.

In addition, alternatively, in the reference signal transmission method according to Embodiment 1 of the present invention, the first and second precoding matrices may be set in advance by the base station and notified to the mobile station.

Alternately, the first precoding matrix may be set in advance by the base station and notified to the mobile station, and the second precoding matrix may be determined by the mobile station on receipt of the first precoding matrix according to the first precoding matrix and a pre-defined correspondence between the first and second precoding matrices.

In addition, alternatively, in the reference signal transmission method according to Embodiment 1 of the present invention, the first and second precoding matrices may be changed by the base station aperiodically and notified to the mobile station.

In addition, although the reference signal transmission method according to Embodiment 1 of the present invention is described above with reference to the flowchart shown in Figure 1, the skilled in the art shall understood that the flowchart shown in Figure 1 is merely exemplary, without limiting the scope of the present invention, and those skilled can transform or modify the flowchart shown in Figure 1 according to actual needs.

It should be noted that the steps in the flowchart shown in Figure 1 can be executed in the chronological order as shown in Figure 1, but not necessarily. Some of the steps can be performed in parallel or independently from one another.

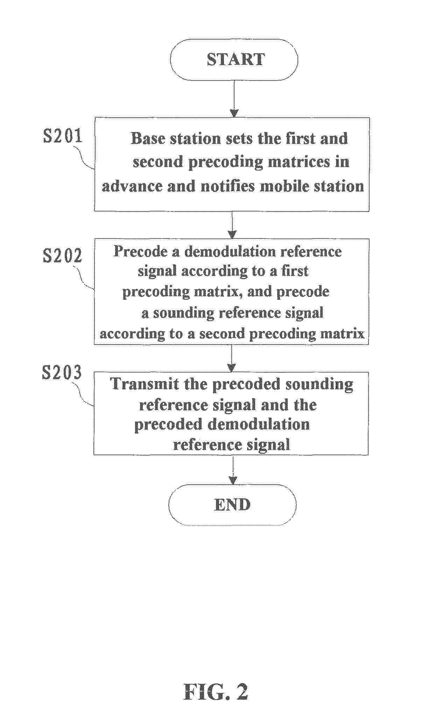

Figure 2 shows a flowchart of a reference signal transmission method according to Embodiment 2 of the present invention.

As shown in Figure 2, the reference signal transmission method according to Embodiment 1 of the present invention starts at step S201.

In step S201, the base station sets in advance and notifies the mobile station a first precoding matrix and a second precoding matrix for precoding data to be transmitted via a plurality of antennas, in which different columns and different lines in the first and second precoding matrices correspond to different data and different antenna, respectively, and the rank of the matrix formed by arranging all of the column vectors in the first and second precoding matrices is equal to or larger than the number of the antennas.

Then, in step S202, a demodulation reference signal to be transmitted along with the data mentioned in step S201 is precoded according to the first precoding matrix, and a sounding reference signal to be transmitted along with the data mentioned in step S201 is precoded according to the second precoding matrix.

Subsequently, in step S203, the precoded sounding reference signal and the precoded demodulation reference signal are transmitted.

The skilled in the art should understand that, both the first precoding matrix and the second precoding matrix can be chosen and configured flexibly depending on the specific application, meeting application requirements of practical wireless communication systems, which falls within the spirit and scope of protection of the present invention.

From the above, in the reference signal transmission method according to Embodiment 2 of the present invention, DMRS and SRS are precoded according to the first precoding matrix and the second precoding matrix that are set by the base station in advance and notified to the mobile station, and the rank of the matrix formed by arranging all of the column vectors in both precoding matrices is equal to or larger than the number of antennas, so that channel quality estimation for each antenna can be done on the base station side by using DMRS in conjunction with SRS.

The reference signal sending method according to Embodiment 2 of the present invention uses precoded DMRS in conjunction with precoded SRS, thereby effectively reduce SRS resources occupied in antenna channel quality estimation, while avoiding the drawback of using precoded DMRS separately, in which case channel quality estimation for each antenna can not be realized.

In addition, the reference signal sending method according to Embodiment 2 of the present invention sends precoded DMRS and precoded SRS so that the base station side can perform channel quality estimation jointly based on the precoded DMRS and the precoded SRS, which therefore eliminates the need for two receivers, and reduces occupied cyclic shift resources, thereby overcoming the drawbacks in the prior art.

Alternatively, in the reference signal transmission method according to Embodiment 2 of the present invention, the first precoding matrix and the second precoding matrix may be orthogonal to each other.

Optionally, in the reference signal transmission method according to Embodiment 2 of the present invention, the first and second precoding matrices may be changed by the base station aperiodically and notified to the mobile station.

In addition, although the reference signal transmission method according to Embodiment 2 of the present invention is described above with reference to the flowchart shown in Figure 2, the skilled in the art shall understood that the flowchart shown in Figure 2 is merely exemplary, without limiting the scope of the present invention, and those skilled can transform or modify the flowchart shown in Figure 2 according to actual needs.

It should be noted that the steps in the flowchart shown in Figure 2 can be executed in the chronological order as shown in Figure 2, but not necessarily. Some of the steps can be performed in parallel or independently from one another.

The present invention also provides a channel quality estimation method used at a base station.

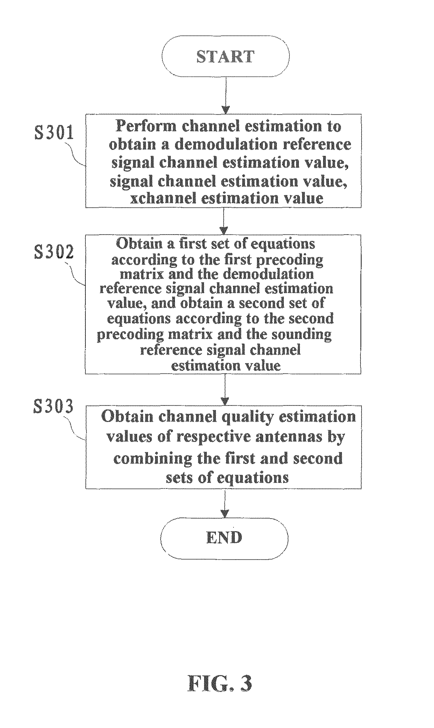

Figure 3 illustrates a flowchart of channel quality estimation method according to Embodiment 3 of the present invention.

As shown in Figure 3, the channel quality estimation method according to Embodiment 3 of the present invention starts at step S301.

In step S301, channel estimation is performed according to a received demodulation reference signal precoded with a first precoding matrix and transmitted along with data via a plurality of antennas of the mobile station so obtain a demodulation reference signal channel estimation value, and channel estimation is performed according to a received sounding reference signal precoded with a second precoding matrix and transmitted along with data to obtain a sounding reference signal channel estimation value, in which different columns and different lines in the first and second precoding matrices correspond to different data and different antenna, respectively.

Then, in step S302, a first set of equations taking channel quality estimation values of respective antennas as variables are obtained according to the first precoding matrix and the obtained demodulation reference signal channel estimation value, and a second set of equations taking channel quality estimation values of respective antennas as variables are obtained according to the second precoding matrix and the obtained sounding reference signal channel estimation value, wherein the rank of the matrix formed by arranging all of the column vectors in the first and second precoding matrices is equal to or larger than the number of the antennas.

Then, in step S303, channel quality estimation values of respective antennas are calculated by combining the first and second sets of equations.

The skilled in the art will understand that, both the first precoding matrix and the second precoding matrix can be chosen and configured flexibly depending on the specific application, and shall fall within the spirit and scope of protection of the present invention as claimed.

From the above, in the channel quality estimation method according to Embodiment 3 of the present invention, channel estimation is performed according to a received demodulation reference signal precoded with a first precoding matrix and a received sounding reference signal precoded with a second precoding matrix, to obtain a demodulation reference signal channel estimation value and a sounding reference signal channel estimation value, and the rank of the matrix formed by arranging all of the column vectors in both precoding matrices is equal to or larger than the number of antennas, so that channel quality estimation for each antenna can be done by using DMRS in conjunction with SRS.

The channel quality estimation method according to Embodiment 3 of the present invention uses precoded DMRS in conjunction with precoded SRS to perform channel quality estimation for each antenna, thereby effectively reduce SRS resources occupied in antenna channel quality estimation, while avoiding the drawback of using precoded DMRS separately, in which case channel quality estimation for each antenna can not be realized.

In addition, the channel quality estimation method according to Embodiment 3 of the present invention performs channel quality estimation based on both the precoded DMRS and the precoded SRS, which therefore eliminates the need for two receivers, and reduces occupied cyclic shift resources, thereby overcoming the drawbacks in the prior art.

For example, in the case where a mobile station having 4 antennas uses the precoding Index 0 in Table 1 to send a rank-2 signal, if the technical solution in the prior art is applied that uses unprecoded DMRS for channel quality estimation, six cyclic shift resources are needed. However, if the channel quality estimation method according to Embodiment 3 of the present invention is applied, since channel quality estimation is performed by using precoded DMRS in conjunction with precoded SRS, channel quality estimation values of respective antennas can be obtained by only four cyclic shift resources: two for DMRS, and two for the precoded SRS.

In addition, if the method in the prior art is applied that uses unprecoded SRS for channel quality estimation, one SRS resource is required for each antenna, hence four SRS resources are needed. That is, in comparison with the channel quality estimation method in the prior art, the channel quality estimation method according to Embodiment 3 of the present invention reduces SRS resources occupied in channel quality estimation by 50%.

Moreover, the channel quality estimation method according to Embodiment 3 of the present invention uses less SRS resources, which can further reduce system interference, and increase the accuracy of channel quality estimation of the system.

Optionally, in the channel quality estimation method according to Embodiment 1 of the present invention, the first precoding matrix and the second precoding matrix may be orthogonal to each other.

As an example, the mobile station may be equipped with four antennas.

On the base station side, the channel quality estimation value $h_{1,dmrs}$ and $h_{2,dmrs}$ are obtained according to DMRS, which has been precoded using the precoding matrix Pdata=[1 1 0 0; 0 0 1 -j]$^T$, received from the mobile station, and the channel quality estimation value $h_{1,srs}$ and $h_{2,srs}$ are obtained according to SRS, which has been precoded the precoding matrix Psrs=[1 -1 0 0; 0 0 1 j]$^T$, received from the mobile station. It can be seen that the precoding matrix Pdata the precoding matrix Psrs are orthogonal to each other.

Then, according to $h_{1,dmrs}$, $h_{2,dmrs}$, $h_{1,srs}$ and $h_{2,srs}$, and the full-rank matrix [1 1 0 0; 0 0 1 -j; 1 -1 0 0; 0 0 1 j]$^T$ formed by Pdata and the following set of equations can be obtained:

$$h_{1,dmrs} = H_{antenna1} + H_{antenna2} + na,$$

$$h_{2,dmrs} = H_{antenna3} - H_{antenna4}*j + nb,$$

$$h_{1,srs} = H_{antenna1} - H_{antenna2} + nc,$$

$$h_{2,srs} = H_{antenna3} + H_{antenna4}*j + nd,$$

where $H_{antennan}$ ($n \in \{1,2,3,4\}$) is the quality estimation value of the n-th antenna, and na, nb, nc and nd are noises.

From the above formula, it can be seen that the number of the equation (i.e., four) is equal to the number of variables to be solved (i.e., the channel quality estimation values of respective antennas, $H_{antennan}$ ($n \in \{1,2,3,4\}$)) Therefore, by the set of the channel quality estimation values of respective antennas are:

$$H_{antenna1} = h_{1,dmrs} + h_{1,srs}$$

$$H_{antenna2} = h_{1,dmrs} - h_{1,srs}$$

$$H_{antenna3} = h_{2,dmrs} + h_{2,srs}$$

$$H_{antenna4} = (h_{2,dmrs} - h_{2,srs})/j$$

Optionally, in the channel quality estimation method according to Embodiment 1 of the present invention, the first and second precoding matrices may be set in advance by the base station and notified to the mobile station.

Alternately, the first precoding matrix may be only set in advance by the base station and notified to the mobile station, and the second precoding matrix may be determined by the mobile station on receipt of the first precoding matrix according to the first precoding matrix and a pre-defined correspondence between the first and second precoding matrices.

Optionally, in the channel quality estimation method according to Embodiment 1 of the present invention, the first and second precoding matrices may be changed by the base station aperiodically and notified to the mobile station.

The skilled in the art will understand that the above precoding matrices used in Embodiment 3 of the present invention are merely exemplary, rather than limiting. The skilled in the art can set different precoding matrices flexibly according to the needs of a practical application, meeting application requirements of practical wireless communication systems, which falls within the spirit and scope of protection of the present invention.

In addition, it is noted that, although the channel quality estimation method according to Embodiment 3 of the present invention is described above with reference to the flowchart shown in Figure 3, the skilled in the art shall understood that the flowchart shown in Figure 3 is merely exemplary, without limiting the scope of the present invention, and those skilled can transform or modify the flowchart shown in Figure 3 according to actual needs.

It should be noted that the steps in the flowchart shown in Figure 3 can be executed in the chronological order as shown in Figure 3, but not necessarily. Some of the steps can be performed in parallel or independently from one another.

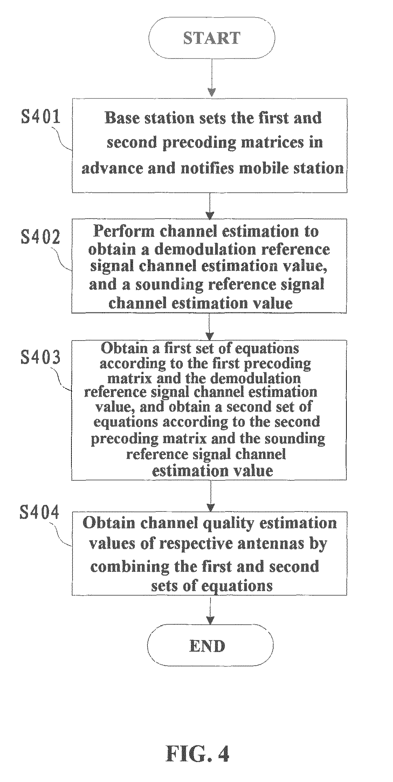

Figure 4 shows a flowchart of a channel quality estimation method according to Embodiment 4 of the present invention.

As shown in Figure 4, the channel quality estimation method according to Embodiment 4 of the present invention starts at step S401.

In step S401, the base station sets in advance and notifies the mobile station a first precoding matrix and a second precoding matrix. Alternately, the first precoding matrix may be only set in advance by the base station and notified to the mobile station, and the second precoding matrix may be determined by the mobile station on receipt of the first precoding matrix according to the first precoding matrix and a pre-defined correspondence between the first and second precoding matrices.

Then, in step S402, channel estimation is performed according to a received demodulation reference signal precoded with a first precoding matrix and transmitted along with data via a plurality of antennas of the mobile station to obtain a demodulation reference signal channel estimation value, and channel estimation is performed according to a received sounding reference signal precoded with a second precoding matrix and transmitted along with data to obtain a sounding reference signal channel estimation value, in which different columns and different lines in the first and second precoding matrices correspond to different data and different antenna, respectively.

Subsequently, in step S403, a first set of equations taking channel quality estimation values of respective antennas as variables are obtained according to the first precoding matrix and the obtained demodulation reference signal channel estimation value, and a second set of equations taking channel quality estimation values of respective antennas as variables are obtained according to the second precoding matrix and the obtained sounding reference signal channel estimation value, wherein the rank of the matrix formed by arranging all of the column vectors in the first and second precoding matrices is equal to or larger that the number of the antennas.

Then, in step S404, channel quality estimation values of respective antennas are calculated by combining the first and second rank of equations.

The skilled in the art should understand that, both the first precoding matrix and the second precoding matrix can be chosen and configured flexibly depending on the specific application, and shall fall within the spirit and scope of protection of the present invention as claimed.

From the above, in the channel quality estimation method according to Embodiment 4 of the present invention, channel estimation is performed according to a received demodulation reference signal precoded with a first precoding matrix set in advance by the base station and a received sounding reference signal precoded with a second precoding matrix set in advance by the base station, to obtain a demodulation reference signal channel estimation value and a sounding reference signal channel estimation value, and the rank of the matrix formed by arranging all of the column vectors in both precoding matrices is equal to or larger than the number of antennas, so that channel quality estimation for each antenna can be done by using DMRS in conjunction with SRS.

The channel quality estimation method according to Embodiment 3 of the present invention uses precoded DMRS in conjunction with precoded SRS to perform channel quality estimation for each antenna, thereby effectively reduce SRS resources occupied in antenna channel quality estimation, while avoiding the drawback of using precoded DMRS separately, in which case channel quality estimation for each antenna can not be realized.

In addition, that the quality estimation method according to Embodiment 3 of the present invention performs channel quality estimation based on that the precoded DMRS and the precoded SRS, which therefore eliminates the need for two receivers, and reduces occupied cyclic shift resources, thereby overcoming the drawbacks in the prior art.

Alternatively, in that the quality estimation method according to Embodiment 4 of the present invention, the first precoding matrix and the second precoding matrix may be orthogonal to each other.

Alternatively, in the channel quality estimation method according to Embodiment 4 of the present invention, the first and second precoding matrices may be changed by the base station aperiodically and notified to the mobile station.

The skilled in the art shall understand that a predetermined period can be set for the reference signal flexibly according to the needs of a practical application, so that delay requirements between the reference signal and CQI feedback in a practical wireless communication system can be met, which shall fall within the spirit and scope of protection of the present invention.

In addition, although the channel quality estimation method according to Embodiment 4 of the present invention is described above with reference to the flowchart shown in Figure 4, the skilled in the art shall understood that the flowchart shown in Figure 4 is merely exemplary, without limiting the scope of the present invention, and those skilled can transform or modify the flowchart shown in Figure 4 according to actual needs.

It should be noted that the steps in the flowchart shown in Figure 4 can be executed in the chronological order as shown in Figure 4, but not necessarily. Some of the steps can be performed in parallel or independently from one another.

According to an embodiment of the present invention, it is also provided a mobile station using the reference signal transmission method according to the embodiment of the present invention, a base station using the channel quality estimation method according to the embodiment of the present invention, and a wireless communication system including the mobile station and the base station.

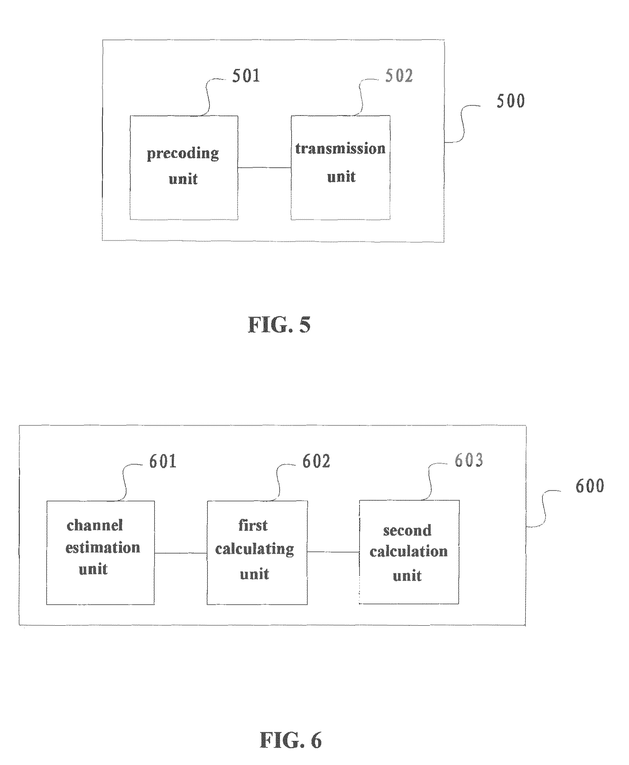

Figure 5 shows a schematic diagram of a mobile station 500 according to Embodiment 5 of the present invention.

As shown in Figure 5, the mobile station 500 according to the Embodiment 2 of the present invention includes a precoding unit 501 and a transmission unit 502.

The precoding unit 501 is configured for precoding a demodulation reference signal to be transmitted along with data to be transmitted via a plurality of antennas according to a first precoding matrix for precoding the data, and precoding a sounding reference signal to be transmitted along with the data according to a second precoding matrix, in which different columns and different lines in the first and second precoding matrices correspond to different data and different antenna, respectively, and the rank of the matrix formed by arranging all of the column vectors in the first and second precoding matrices is equal to or larger than the number of the antennas.

The transmission unit 502 is configured for transmitting the precoded sounding reference signal and the precoded demodulation signal.

The skilled in the art will understand that, both the first precoding matrix and the second precoding matrix can be chosen and configured flexibly depending on the specific application, so that requirements in a practical wireless communication system can be met, which shall fall within the spirit and scope of protection of the present invention.

The specific implementation of each unit in the mobile station 500 of Embodiment 5 of the present invention can be referred to the implementation of each step in the reference signal transmission method in a wireless communication system of Embodiment 1 of the present invention described above. Accordingly, detailed description of the specific implementation of each unit is omitted here for simplicity reasons.

As can be seen from the above, the mobile station 500 according to the embodiment of the present invention precodes DMRS and SRS according to the first precoding matrix and the second precoding matrix respectively, and the rank of the matrix formed by arranging all of the column vectors in both precoding matrices is equal to or larger than the number of antennas, so that channel quality estimation for each antenna can be done on the corresponding base station side by using DMRS in conjunction with SRS.

The mobile station 500 according to the embodiment of the present invention uses precoded DMRS in conjunction with precoded SRS, thereby effectively reduce SRS resources occupied in antenna channel quality estimation, while avoiding the drawback of using precoded DMRS separately, in which case channel quality estimation for each antenna can not be realized.

In addition, the mobile station 500 according to the embodiment of the present invention sends precoded DMRS and precoded SRS so that the base station side can perform channel quality estimation jointly based on the precoded DMRS and the precoded SRS, which therefore eliminates the need for two receivers, and reduces occupied cyclic shift resources, thereby overcoming the drawbacks in the prior art.

Alternatively, in the mobile station 500 according to the embodiment of the present invention, the first and second precoding matrices may be set in advance by the base station and notified to the mobile station.

Alternately, the first precoding matrix may be only set in advance by the base station and notified to the mobile station, and the second precoding matrix may be determined by the mobile station on receipt of the first precoding matrix according to the first precoding matrix and a pre-defined correspondence between the first and second precoding matrices.

Optionally, in the mobile station 500 according to the embodiment of the present invention, the first precoding matrix and the second precoding matrix may be orthogonal to each other.

Optionally, in the mobile station 500 according to the embodiment of the present invention, the first and second precoding matrices may be changed by the base station aperiodically and notified to the mobile station.

In addition, although the mobile station 500 according to the embodiment of the present invention is described above with reference to the schematic diagram shown in Figure 5, the skilled in the art shall understood that the schematic diagram shown in Figure 5 is merely exemplary, without limiting the scope of the present invention, and those skilled can transform or modify the schematic diagram shown in Figure 5 according to actual needs.

Figure 6 shows a schematic diagram of a base station 600 according to Embodiment 6 of the present invention.

As shown in Figure 6, the base station 600 according to Embodiment 3 of the present invention includes a channel estimation unit 601, a first calculating unit 602 and a second calculating unit 603.

The channel estimation unit 601 is configure for performing channel estimation according to a received demodulation reference signal precoded with a first precoding matrix and transmitted along with the data via a plurality of antennas of the mobile station to obtain a demodulation reference signal channel estimation value, and performing channel estimation according to a received sounding reference signal precoded with a second precoding matrix and transmitted antennas along with the data to obtain a sounding reference signal channel estimation value, in which different columns and different lines in the first and second precoding matrices correspond to different data and different antenna, respectively.

The first calculating unit 602 is configured for obtaining a first set of equations taking channel quality estimation values of respective antennas as variables according to the first precoding matrix and the obtained demodulation reference signal channel estimation value, and obtaining a second set of equations taking channel quality estimation values of respective antennas as variables according to the second precoding matrix and the obtained sounding reference signal channel estimation value, wherein the rank of the matrix formed by arranging all of the column vectors in the first and second precoding matrices is equal to or larger than the number of the antennas.

The second calculation unit 603 is configured for calculating channel quality estimation values of respective antennas by combining the first and second sets of equations.

The skilled in the art will understand that, both the first precoding matrix and the second precoding matrix can be chosen and configured flexibly depending on the specific application, so that requirements in a practical wireless communication system can be met, which shall fall within the spirit and scope of protection of the present invention.

The specific implementation of each unit in the base station 600 according to Embodiment 6 of the present invention can be referred to the implementation of each step in the channel quality estimation method according to Embodiment 3 of the present invention described above. Accordingly, detailed description of the specific implementation of each unit is omitted here for simplicity reasons.

From the above, in the base station 600 according to the embodiment of the present invention, channel estimation are performed according to a received demodulation reference signal precoded with a first precoding matrix and a received sounding reference signal precoded with a second precoding matrix respectively, to obtain respectively a demodulation reference signal channel estimation value and a sounding reference signal channel estimation value, and the rank of the matrix formed by arranging all of the column vectors in both precoding matrices is equal to or larger than the number of antennas, no that channel quality estimation for each antenna can be done by using DMRS in conjunction with SRS.

The base station 600 according to the embodiment of the present invention uses precoded DMRS in conjunction with precoded SRS to perform channel quality estimation for each antenna, thereby effectively reduce SRS resources occupied in antenna channel quality estimation, while avoiding the drawback of using precoded DMRS separately, in which case channel quality estimation for each antenna can not be realized.

In addition, the base station 600 according to the embodiment of the present invention performs channel quality estimation based on both the precoded DMRS and the precoded SRS, which therefore eliminates the need for two receivers, and reduces occupied cyclic shift resources, thereby overcoming the drawbacks in the prior art.

Optionally, in the base station 600 according to the embodiment of the present invention, the first and second precoding matrices may be set in advance by the base station and notified to the mobile station.

Alternately, the first precoding matrix may be only set in advance by the base station and notified to the mobile station, and the second precoding matrix may be determined by the mobile station on receipt of the first precoding matrix according to the first precoding matrix and a pre-defined correspondence between the first and second precoding matrices.

Optionally, in the base station 600 according to the embodiment of the present invention, the first precoding matrix and the second precoding matrix may be orthogonal to each other.

Optionally, in the base station 600 according to the embodiment of the present invention, the first and second precoding matrices may be changed by the base station aperiodically and notified to the mobile station.

In addition, it should be noted that, although the base station 600 according to the embodiment of the present invention is described above with reference to the schematic diagram in Figure 6, the skilled in the art shall understood that the schematic diagram in Figure 6 is merely exemplary, without limiting the scope of the present invention, and those skilled can transform or modify the schematic diagram shown in Figure 6 according to actual needs.

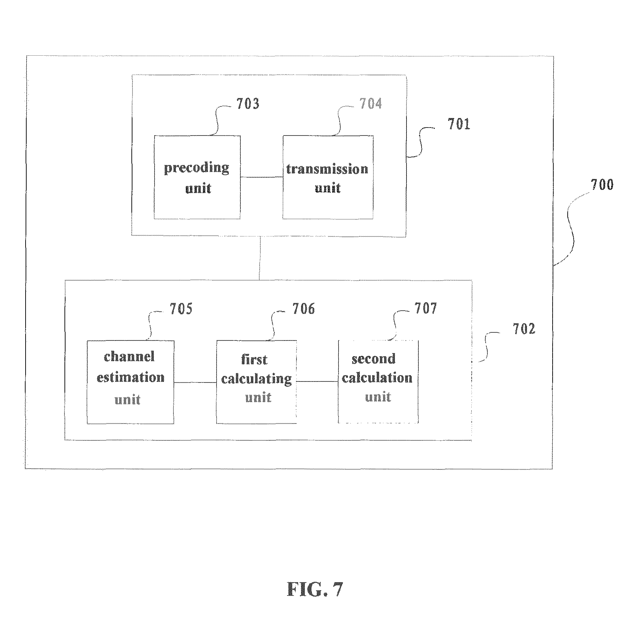

Figure 7 illustrates a schematic diagram of a wireless communication system 700 according to Embodiment 7 of the present invention.

As shown in Figure 7, the wireless communication system 700 includes a mobile station 701 and a base station 702.

The mobile station 701 includes a precoding unit 703 and a transmission unit 704.

The precoding unlit 703 is configured for precoding a demodulation reference signal to be transmitted along with data to be transmitted via a plurality of antennas according to a first precoding matrix for precoding the data, and precoding a sounding reference signal to be transmitted along with the data according to a second precoding matrix, in which different columns and different lines in the first and second precoding matrices correspond to different data and different antenna, respectively, and the rank of the matrix formed by arranging all of the column vectors in the first and second precoding matrices is equal to or larger that the number of the antennas.

The transmission unit 704 is configured for transmitting the precoded sounding reference signal and the precoded demodulation reference signal.

The base station 702 includes a channel estimation unit 705, a first calculating unit 706 and a second calculating unit 707.

The channel estimation unit 705 is configure for performing channel estimation according to a received demodulation reference signal precoded with a first precoding matrix and transmitted along with the data via a plurality of antennas of the mobile station to obtain a demodulation reference signal channel estimation value, and performing channel estimation according to a received sounding reference signal precoded with a second precoding matrix and transmitted antennas along with the data to obtain a sounding reference signal channel estimation value, in which different columns and different lines in the first and second precoding matrices correspond to different data and different antenna, respectively.

The first calculating unit 706 is configured for obtaining a first set of equations taking channel quality estimation values of respective antennas as variables according to the first precoding matrix and the obtained demodulation reference signal channel estimation value, and obtaining a second set of equations taking channel quality estimation values of respective antennas as variables according to the second precoding matrix and the obtained sounding reference signal channel estimation value, wherein the rank of the matrix formed by arranging all of the column vectors in the first and second precoding matrices is equal to or larger that the number of the antennas.

The second calculation unit 707 is configured for calculating channel quality estimation values of respective antennas by combining the first and second sets of equations.

The skilled in the art will understand that, both the first precoding matrix and the second precoding matrix can be chosen and configured flexibly depending on the specific application, so that requirements in a practical wireless communication system can be met, which shall fall with the spirit and scope of protection of the present invention.

The specific implementation of each unit in the wireless communication system 700 of Embodiment 7 of the present invention can be referred to the implementation of each step in the reference signal transmission method according to Embodiment 1 of and each step in the channel quality estimation method according to Embodiment 3 of the present invention described above. Accordingly, detailed description of the specific implementation of each unit is omitted here for simplicity reasons.

From the above, the base station 702 in the wireless communication system 700 of the embodiments of the present invention performs channel estimations according to a a demodulation reference signal precoded with a first precoding matrix and received from the mobile station 701 and a sounding reference signal precoded with a second precoding matrix and received from the mobile station 701 respectively, to respectively obtain a demodulation reference signal channel estimation value and a sounding reference signal channel estimation value, and the rank of the matrix formed by arranging all of the column vectors in both precoding matrices is equal to or larger that the number of antennas, so that channel quality estimation for each antenna can be done on the corresponding base station side by using DMRS in conjunction with SRS.

The wireless communication system 700 according to the embodiment of the present invention uses precoded DMRS in conjunction with precoded SRS to perform channel quality estimation for each antenna, thereby effectively reduce SRS resources occupied in antenna channel quality estimation, while avoiding the drawback of using precoded DMRS separately, in which case channel quality estimation for each antenna can not be realized.

In addition, the wireless communication system 700 according to the embodiment of the present invention performs channel quality estimation based on both the precoded DMRS and the precoded SRS, which therefore eliminates the need for two receivers, and reduces occupied cyclic shift resources, thereby overcoming the drawbacks in the prior art.

Optionally, in the wireless communication system 700 according to the embodiment of the present invention, the first and second precoding matrices may be set in advance by the base station and notified to the mobile station.

Alternately, the first precoding matrix may be only set in advance by the base station and notified to the mobile station, and the second precoding matrix may be determined by the mobile station on receipt of the first precoding matrix according to the first precoding matrix and a pre-defined correspondence between the first and second precoding matrices.

Optionally, in the wireless communication system 700 according to the embodiment of the present invention, the first precoding matrix and the second precoding matrix may be orthogonal to each other.

Optionally, in the wireless communication system 700 according to the embodiment of the present invention, the first and second precoding matrices may be changed by the base station aperiodically and notified to the mobile station.

In addition, it should be noted that, although the wireless communication system 700 according to the embodiment of the present invention is described above with reference to the schematic diagram in Figure 7, the skilled in the art shall understood that the schematic diagram in Figure 7 is merely exemplary, without limiting the scope of the present invention, and those skilled can transform or modify the schematic diagram shown in Figure 7 according to actual needs.

The present invention and its advantages have been described in detail, however, it shall be understood that various modifications, substitutions, and transformations can be made without deviation from the spirit and scope of the present invention as defined by the appended claim.

Finally, it should be noted that, in the present disclosure, relational terms such as "first" and "second" are used only to distinguish one entity or operation from the other entity or operation, but not necessarily demand or imply that there is actual relation or order among those entities and operations. Furthermore, the terms "including", "containing", or any other variations thereof means a non-exclusive inclusion, so that the process, method, article or device that includes a series of elements includes not only these elements but also other elements that are not explicitly listed, or further includes elements inherent in the process, method, article or device. Moreover, when there is no further limitation, the element defined by the wording "include(s) a ..." does not exclude the case that in the process, method, article or device that includes the element there are other same elements.

Although it is disclosed above the present invention by way of the specific embodiments of the invention, it it should be understood the embodiments described herein are for illustrative purposes only and shall not be interpreted as limiting the scope of the invention. Various modifications and alternations can be made by those skilled in the art without deviation from the spirit and scope of the present invention. Therefore, the scope of the present invention shall be defined by the appended claims and their equivalents.

**Claims**

1. A method for transmitting a reference signal, comprising:

   precoding a demodulation reference signal to be transmitted along with data to be transmitted via a plurality of antennas of a mobile station according to a first precoding matrix for precoding the data, and precoding a sounding reference signal to be transmitted along with the data according to a second precoding matrix, in which different columns and different lines in the first and second precoding matrices correspond to different data and different antennas, respectively; and
   transmitting a precoded sounding reference signal and a precoded demodulation signal,
   wherein the rank of the matrix formed by arranging all of the column vectors in the first and second precoding matrices is equal to or larger than the number of the antennas.

2. The method of claim 1, wherein the first and second precoding matrices are set in advance by a base station and are notified to a mobile station; or
   the first precoding matrix is set in advance by the base station and notified to the mobile station, and the second precoding matrix is determined by the mobile station on receipt of the first precoding matrix according to the first precoding matrix and a pre-defined correspondence between the first and second precoding matrices.

3. The method of claim 1, wherein the first and second precoding matrices are orthogonal to each other.

4. The method of claim 1 wherein the first and second precoding matrices are changed by a base station aperiodically and are notified to a mobile station.

**5.** A method for estimating channel quality, comprising:

performing channel estimation according to a received demodulation reference signal precoded with a first precoding matrix and transmitted along with data via a plurality of antennas of a mobile station to obtain a demodulation reference signal channel estimation value, and performing channel estimation according to a received sounding reference signal precoded with a second precoding matrix and transmitted along with the data to obtain a sounding reference signal channel estimation value, in which different columns and different lines in the first and second precoding matrices correspond to different data and different antennas, respectively; obtaining a first set of equations taking channel quality estimation values of respective antennas as variables according to the first precoding matrix and the obtained demodulation reference signal channel estimation value, and obtaining a second set of equations taking channel quality estimation values of respective antennas as variables according to the second precoding matrix and the obtained sounding reference signal channel estimation value, wherein the rank of the matrix formed by arranging all of the column vectors in the first and second precoding matrices is equal to or larger than the number of the antennas; and calculating channel quality estimation values of respective antennas by combining the first and second sets of equations.

**6.** The method of claim 5, wherein the first and second precoding matrices are set in advance by a base station and are notified to a mobile station; or
the first precoding matrix is set in advance by the base station and notified to the mobile station, and the second precoding matrix is determined by the mobile station on receipt of the first precoding matrix according to the first precoding matrix and a pre-defined correspondence between the first and second precoding matrices.

**7.** The method of claim 5, wherein the first and second precoding matrices are orthogonal to each other.

**8.** The method of claim 5, wherein the first and second precoding matrices are changed by a base station aperiodically and are notified to a mobile station.

**9.** A mobile station comprising:

a plurality of antennas;
a precoding unit configured for precoding a demodulation reference signal to be transmitted along with data to be transmitted via the plurality of antennas according to a first precoding matrix for precoding the data, and preceding a sounding reference signal to be transmitted along with the data according to a second precoding matrix, in which different columns and different lines in the first and second precoding matrices correspond to different data and different antenna, respectively, and the rank of the matrix formed by arranging all of the column vectors in the first and second precoding matrices is equal to or larger than the number of the antennas; and
a transmission unit configured for transmitting a precoded sounding reference signal and a precoded demodulation signal.

**10.** The mobile station of claim 9, wherein the first and second precoding matrices are set in advance by a base station and are notified to a mobile station; or
the first precoding matrix is set in advance by the base station and notified to the mobile station, and the second precoding matrix is determined by the mobile station on receipt of the first precoding matrix according to the first precoding matrix and a pre-defined correspondence between the first and second precoding matrices.

**11.** The mobile station of claim 9, wherein the first and second precoding matrices are orthogonal to each other.

**12.** The mobile station of claim 9, wherein the first and second precoding matrices are changed by a base station aperiodically and are notified to a mobile station.

**13.** A base station, comprising:

a channel estimation unit configure for performing channel estimation according to a received demodulation reference signal precoded with first precoding matrix and transmitted along with data via a plurality of antennas of a mobile station to obtain a demodulation reference signal channel estimation value, and performing channel estimation according to a received sounding reference signal precoded with a second precoding matrix and transmitted along with data to obtain a sounding reference signal channel estimation value, in which different columns and different lines in the first and second precoding matrices correspond to different data and different antennas, respectively;

a first calculating unit configured for obtaining a first set of equations taking channel quality estimation values of respective antennas as variables according to the first precoding matrix and the obtained demodulation reference signal channel estimation value, and obtaining a second set of equations taking channel quality estimation values of respective antennas as variables according to the second precoding matrix and the obtained sounding reference signal channel estimation value, wherein the rank of the matrix formed by arranging all of the column vectors in the first and second precoding matrices is equal to or larger than the number of the antennas; and

a second calculation unit configured for calculating channel quality estimation values of respective antennas by combining the first and second sets of equations.

14. The base station of claim 13, wherein the first and second precoding matrices are set in advance by a base station and are notified to a mobile station; or

the first precoding matrix is set in advance by the base station and notified to the mobile station, and the second precoding matrix is determined by the mobile station on receipt of the first precoding matrix according to the first precoding matrix and a pre-defined correspondence between the first and second precoding matrices.

15. The base station of claim 13, wherein the first and second precoding matrices are orthogonal to each other.

16. The base station of claim 13, wherein the first and second precoding matrices are changed by a base station aperiodically and are notified to a mobile station.

17. A wireless communication system comprising the mobile station of any of claims 9-12 and the base station of any of claims 13-16.

START

S101 | Precode a demodulation reference signal according to a first precoding matrix, and precode a sounding reference signal according to a second precoding matrix

S102 | Transmit the precoded sounding reference signal and the precoded demodulation reference signal

END

FIG. 1

```
                    ┌─────────────┐
                    │    START    │
                    └──────┬──────┘
                           │
                           ▼
         ┌──────────────────────────────────────┐
  S201   │      Base station sets the first and  │
         │       second precoding matrices in    │
         │   advance and notifies mobile station │
         └──────────────────┬───────────────────┘
                            │
                            ▼
         ┌──────────────────────────────────────┐
  S202   │      Precode a demodulation reference │
         │          signal according to a first  │
         │          precoding matrix, and precode│
         │            a sounding reference signal │
         │   according to a second precoding matrix│
         └──────────────────┬───────────────────┘
                            │
                            ▼
         ┌──────────────────────────────────────┐
  S203   │    Transmit the precoded sounding     │
         │         reference signal and the      │
         │          precoded demodulation        │
         │             reference signal          │
         └──────────────────┬───────────────────┘
                            │
                            ▼
                    ┌─────────────┐
                    │     END     │
                    └─────────────┘
```

FIG. 2

START

S301 — Perform channel estimation to obtain a demodulation reference signal channel estimation value, signal channel estimation value, xchannel estimation value

S302 — Obtain a first set of equations according to the first precoding matrix and the demodulation reference signal channel estimation value, and obtain a second set of equations according to the second precoding matrix and the sounding reference signal channel estimation value

S303 — Obtain channel quality estimation values of respective antennas by combining the first and second sets of equations

END

FIG. 3

START

S401 — Base station sets the first and second precoding matrices in advance and notifies mobile station

S402 — Perform channel estimation to obtain a demodulation reference signal channel estimation value, and a sounding reference signal channel estimation value

S403 — Obtain a first set of equations according to the first precoding matrix and the demodulation reference signal channel estimation value, and obtain a second set of equations according to the second precoding matrix and the sounding reference signal channel estimation value

S404 — Obtain channel quality estimation values of respective antennas by combining the first and second sets of equations

END

FIG. 4

501

502

500

precoding
unit

transmission
unit

**FIG. 5**

601

602

603

600

channel
estimation
unit

first
calculating
unit

second
calculation
unit

**FIG. 6**

FIG. 7

# INTERNATIONAL SEARCH REPORT

International application No.

PCT/CN2010/074144

**A. CLASSIFICATION OF SUBJECT MATTER**

H04W 16/00(2009.01)i

According to International Patent Classification (IPC) or to both national classification and IPC

**B. FIELDS SEARCHED**

Minimum documentation searched (classification system followed by classification symbols)

IPC:H04W,H04L,H04B

Documentation searched other than minimum documentation to the extent that such documents are included in the fields searched

Electronic data base consulted during the international search (name of data base and, where practicable, search terms used)

VEN,WOTXT,USTXT,EPTXT,CNABS,CNTXT,CNKI: demodulation reference, sounding reference, signal, sequence, reference signal, pilot, DMRS, SRS, matrix, rank, precode, precoding, precoded, predictive encode

**C. DOCUMENTS CONSIDERED TO BE RELEVANT**

| Category* | Citation of document, with indication, where appropriate, of the relevant passages | Relevant to claim No. |
|---|---|---|
| A | CN101615937A(ZTE CORP) 30 Dec. 2009(30.12.2009) the whole document | 1-17 |
| A | CN101686110A(DATANG MOBILE COMMUNICATION EQUIP CO LTD)31 Mar. 2010(31.03.2010) the whole document | 1-17 |
| A | WO2009037580A2(NORTEL NETWORKS LTD)26 Mar. 2009(26.03.2009) the whole document | 1-17 |
| A | WO2009020983A1(QUALCOMM Incorporated) 12 Feb. 2009(12.02.2009) the whole document | 1-17 |
| A | WO2009150177A2(NOKIA SIEMENS NETWORKS OY) 17 Dec. 2009(17.12.2009) | 1-17 |

☐ Further documents are listed in the continuation of Box C.  ☒ See patent family annex.

| | | |
|---|---|---|
| * Special categories of cited documents: | "T" later document published after the international filing date or priority date and not in conflict with the application but cited to understand the principle or theory underlying the invention | |
| "A" document defining the general state of the art which is not considered to be of particular relevance | | |
| "E" earlier application or patent but published on or after the international filing date | "X" document of particular relevance; the claimed invention cannot be considered novel or cannot be considered to involve an inventive step when the document is taken alone | |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art | |
| "O" document referring to an oral disclosure, use, exhibition or other means | | |
| "P" document published prior to the international filing date but later than the priority date claimed | "&"document member of the same patent family | |

| Date of the actual completion of the international search | Date of mailing of the international search report |
|---|---|
| 11 Mar. 2011(11.03.2011) | **31 Mar. 2011 (31.03.2011)** |

| Name and mailing address of the ISA/CN<br>The State Intellectual Property Office, the P.R.China<br>6 Xitucheng Rd., Jimen Bridge, Haidian District, Beijing, China<br>100088<br>Facsimile No. 86-10-62019451 | Authorized officer<br><br>SHI, Rui<br><br>Telephone No. (86-10)62411471 |
|---|---|

Form PCT/ISA /210 (second sheet) (July 2009)

## INTERNATIONAL SEARCH REPORT
### Information on patent family members

| | International application No. |
|---|---|
| | PCT/CN2010/074144 |

| Patent Documents referred in the Report | Publication Date | Patent Family | Publication Date |
|---|---|---|---|
| CN101615937A | 30.12.2009 | NONE | |
| CN101686110A | 31.03.2010 | NONE | |
| WO2009037580A2 | 26.03.2009 | JP2010534020W | 28.10.2010 |
| | | CN101868988A | 20.10.2010 |
| | | EP2168401A2 | 31.03.2010 |
| | | IN200906979P4 | 05.03.2010 |
| | | KR20100049025A | 11.05.2010 |
| | | US2010173639A1 | 08.07.2010 |
| | | CA2690990A1 | 26.03.2009 |
| | | WO2009037580A3 | 29.04.2010 |
| WO2009020983A1 | 12.02.2009 | US2009073922A1 | 19.03.2009 |
| | | AU2008283905A1 | 12.02.2009 |
| | | CN101772970A | 07.07.2010 |
| | | IN201000814P4 | 06.08.2010 |
| | | EP2186362A1 | 19.05.2010 |
| | | JP2010536260W | 25.11.2010 |
| | | TW200922230A | 16.05.2009 |
| | | KR20100044882A | 30.04.2010 |
| | | MX2010001197A | 31.03.2010 |
| | | CA2693606A1 | 12.02.2009 |
| WO2009150177A2 | 17.12.2009 | WO2009150177A3 | 23.09.2010 |
| | | AU2009256606A1 | 17.12.2009 |

Form PCT/ISA /210 (patent family annex) (July 2009)